# EUROPEAN PATENT APPLICATION

(11) **EP 4 049 745 A1**
(43) Date of publication of application: **31.08.2022**
(21) Application number: 22156814.0
(22) Date of filing: 15.02.2022
(51) Int. Cl.: B01D 53/32, C25B 3/26, C25B 9/60, C25B 15/08

(54) **CARBON DIOXIDE RECOVERY APPARATUS, SYSTEM AND METHOD**

(30) Priority: 26.02.2021 JP 2021030389
(71) Applicant: DENSO CORPORATION, Kariya-city, Aichi 448-8661 (JP)
(72) Inventor: OGURA, Hayata, Kariya-city, 448-8661 (JP); UMEDA, Hiroaki, Kariya-city, 448-8661 (JP)
(74) Representative: TBK

(57) **Abstract**

A carbon recovery system and method improve purity of carbon dioxide when it is recovered and include an electrochemical cell (101) including a working electrode (102) and a counter electrode (103). When a given voltage is applied between the working electrode and the counter electrode, electrons are supplied from the counter electrode to the working electrode. The working electrode then combines with carbon dioxide upon receiving the electrons supplied thereto. An adsorber (100) accommodates the electrochemical cell and introduces a carbon dioxide-containing gas to itself. A liquid supply section (142, 143) supplies liquid to the adsorber with a given voltage being applied between the working electrode and the counter electrode. A discharge section (lb, 144, 145) discharges the liquid supplied from the liquid supply section and carbon dioxide-removed gases from the adsorber with the given voltage being applied between the working electrodes and the counter electrode.

## Description

### BACKGROUND

### Technical Field

The present disclosure relates to carbon dioxide recovery apparatus, system, and method that recover carbon dioxide from gas containing carbon dioxide.

### Related Art

A gas separation apparatus which separates carbon dioxide from carbon dioxide-containing gas by using an electrochemical reaction has been proposed. In such a gas separation apparatus, a carbon dioxide adsorbent capable of adsorbing carbon dioxide is employed in a working electrode constituting an electrochemical cell. Since the carbon dioxide adsorbent is an electrochemically active species, adsorption and desorption of the carbon dioxide to and from the carbon dioxide adsorbent can be switched by changing a potential between the working electrode and a counter electrode.

However, in such a gas separation apparatus, gases (e.g., nitrogen, oxygen) present around the working electrode other than the carbon dioxide are highly likely to be recovered together upon recovering the carbon dioxide. Accordingly, a degree of purity of the carbon dioxide as recovered may be reduced.

Accordingly, an object of the present disclosure is to address and resolve the above-described problem and it is an object of the present disclosure to provide a carbon dioxide recovery apparatus capable of increasing a degree of purity of the carbon dioxide when recovered.

### SUMMARY

Accordingly, one aspect of the present disclosure provides a novel carbon dioxide recovery apparatus 10 that separates carbon dioxide from a carbon dioxide-containing gas containing carbon dioxide by causing an electrochemical reaction. The carbon dioxide recovery apparatus comprises: a working electrode (102); a counter electrode (103); and a voltage applicator (105) to apply a voltage between the working electrode and the counter electrode. The counter electrode 103 supplies electrons to the working electrode 102 when the voltage is applied by the power supply.

The working electrode 102 includes an electrochemical cell (101) that adsorbs carbon dioxide upon receiving the electrons from the counter electrode (103). The working electrode 102 also includes an adsorber (100) accommodating the electrochemical cell 101 to receive the carbon dioxide-containing gas. The working electrode 102 also includes a liquid supply section (142, 143) to supply liquid to the adsorber 100 while the voltage is applied between the working electrode and the counter electrode.

The working electrode 102 also includes a discharge section (1b, 144, 145) that discharges the liquid supplied from the liquid supply section and carbon dioxide-removed gas obtained by separating carbon dioxide from the carbon dioxide-containing gas, from the adsorber while the voltage is applied between the working electrode and the counter electrode.

Another aspect of the present disclosure provides a novel method of separating carbon dioxide from a carbon dioxide-containing gas containing carbon dioxide by causing an electrochemical reaction. The method comprises the steps of: applying a voltage between a working electrode and a counter electrode; supplying electrons from the counter electrode to the working electrode 102 based on the voltage applied therebetween; and receiving the carbon dioxide-containing gas at an adsorber (100) included in the working electrode accommodating an electrochemical cell. The method further comprises the steps of: adsorbing carbon dioxide included in the carbon dioxide-containing gas on the electrochemical cell upon receiving the electrons from the counter electrode (103); supplying liquid from a liquid supply section to the adsorber 100 while applying the voltage between the working electrode and the counter electrode; and discharging the liquid supplied from the liquid supply section and carbon dioxide-removed gas obtained by separating carbon dioxide from the carbon dioxide-containing gas, from the adsorber while applying the voltage between the working electrode and the counter electrode.

Another aspect of the present disclosure provides a novel carbon dioxide recovery system that comprises: a CO₂-containing gas compressor 11 to pressure feed CO₂-containing gas downstream; a liquid tank 141 to store liquid; and a liquid supply pump 143 to pump the liquid of the liquid tank 141 downstream. The carbon dioxide recovery system further includes a liquid discharge pump 145 that discharges the liquid to the liquid tank 141; a CO₂ utilization apparatus 13 that receives and utilizes CO₂; and a flow channel switching valve 12 that switches between two channels to guide the CO₂ and the CO₂-removed gas to the CO₂ utilization apparatus 13 and the atmosphere, respectively. The carbon dioxide recovery system further includes the above-described carbon dioxide recovery apparatus 10. The carbon dioxide recovery apparatus 10 is located downstream of the liquid supply pump 143 and the CO₂-containing gas compressor 11. The carbon dioxide recovery apparatus 10 is located upstream of the liquid discharge pump 145. The carbon dioxide recovery system further includes a controller to control each of the CO₂-containing gas compressor 11, the liquid supply pump 143, the carbon dioxide recovery apparatus 10, the liquid discharge pump 145, and the flow channel switching valve 12 to recover carbon dioxide to be used.

According to various aspects of the present disclosure, due to provision of the liquid supply section (142, 143) and the discharge section (1b, 144, 145), gas excluding carbon dioxide can be discharged with liquid from the adsorber (100). As a result, since the degree of purity of the carbon dioxide can be increased in the adsorber (100), a purity of the carbon dioxide as recovered can accordingly be enhanced.

### BRIEF DESCRIPTION OF THE DRAWINGS

A more complete appreciation of the present disclosure and many of the attendant advantages of the present disclosure will be more readily obtained as substantially the same becomes better understood by reference to the following detailed description when considered in connection with the accompanying drawings, wherein:
FIG. 1 is a diagram illustrating an overall structure of a carbon dioxide recovery system according to a first embodiment of the present disclosure:
FIG. 2 is a diagram illustrating a carbon dioxide recovery apparatus included in the carbon dioxide recovery system of the first embodiment;
FIG. 3 is a diagram illustrating an electrochemical cell employed in the carbon dioxide recovery apparatus of the first embodiment;
FIG. 4 is a cross-sectional view illustrating the electrochemical cell of the first embodiment shown in FIG. 3;
FIG. 5 is a diagram illustrating a working electrode employed in the first embodiment;
FIG. 6 is an enlarged cross-sectional view illustrating a periphery of a surface of the working electrode of the first embodiment;
FIG. 7 is a diagram illustrating an adsorber employed in the first embodiment of the present disclosure;
FIG. 8 is a time chart illustrating a result of a control process performed by a controller disposed in the carbon dioxide recovery system according to the first embodiment of the present disclosure;
FIG. 9 is a diagram illustrating operation of the carbon dioxide recovery apparatus in a carbon dioxide adsorption mode according to the first embodiment;
FIG. 10 is diagram also illustrating operation of the carbon dioxide recovery apparatus in a carbon dioxide recovery mode according to the first embodiment of the present disclosure;
FIG. 11 is a diagram illustrating an adsorber according to a second embodiment of the present disclosure;
FIG. 12 is a diagram illustrating an adsorber according to a third embodiment of the present disclosure;
FIG. 13 is a diagram illustrating an adsorber according to a fourth embodiment of the present disclosure; and
FIG. 14 is a diagram illustrating an electrochemical cell according to another embodiment of the present disclosure.

### DETAILED DESCRIPTION

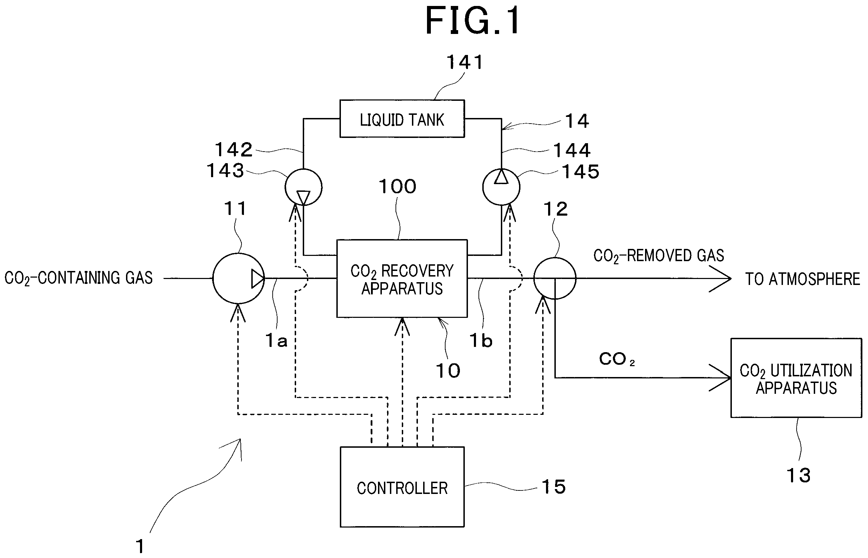

Referring now to the drawings, wherein like reference numerals designate identical or corresponding parts throughout the several views thereof, and to FIGS. 1 to 10, a first embodiment of the present disclosure will be hereinbelow described.

As shown in FIG. 1, a carbon dioxide recovery system 1 of this embodiment includes a compressor 11, a carbon dioxide recovery apparatus 10, and a flow channel switching valve 12. The carbon dioxide recovery system 1 also includes a carbon dioxide utilization apparatus 13, a liquid circuit 14, and a controller 15.

The compressor 11 pressure feeds carbon dioxide-containing gas to the carbon dioxide recovery apparatus 10. The carbon dioxide-containing gas is a mixed gas containing carbon dioxide and at least one of gases other than the carbon dioxide. The carbon dioxide-containing gas can be atmospheric air or exhaust gas output from an internal combustion engine, for example. The number of revolutions (i.e., a pressure feeding ability) of the compressor 11 is controlled by a control voltage output from the controller 15.

The carbon dioxide recovery apparatus 10 separates and recovers carbon dioxide from the carbon dioxide-containing gas. Further, the carbon dioxide recovery apparatus 10 discharges either carbon dioxide-extracted gas recovered by extracting the carbon dioxide from the carbon dioxide-containing gas or the carbon dioxide collected (i.e., recovered) from the carbon dioxide-containing gas. A configuration of the carbon dioxide recovery apparatus 10 will be described later more in detail.

The flow channel switching valve 12 is a three-way valve arranged downstream of the carbon dioxide recovery apparatus 10 for switching a flow channel for gas discharged from the carbon dioxide recovery apparatus 10. The flow channel switching valve 12 switches a flow channel for exhaust gas toward the atmosphere when carbon dioxide-removed gas is discharged from the carbon dioxide recovery apparatus 10. By contrast, the flow channel switching valve 12 switches the flow channel for exhaust gas toward the carbon dioxide utilization apparatus 13 when carbon dioxide is discharged from the carbon dioxide recovery apparatus 10. The flow channel switching valve 12 is controlled by a control voltage output from the controller 15.

The carbon dioxide utilization apparatus 13 utilizes carbon dioxide. For example, as the carbon dioxide utilization apparatus 13, a storage tank for storing carbon dioxide or a conversion device for converting carbon dioxide into fuel can be used. The conversion device can be a device that converts carbon dioxide into hydrocarbon fuel such as methane, etc. The hydrocarbon fuel can be either gaseous fuel or liquid fuel at ordinary temperature and normal pressure.

The liquid circuit 14 circulates liquid through the carbon dioxide recovery apparatus 10. Hereinafter, the liquid circulating through the liquid circuit 14 is referred to as circulation liquid. As the circulation liquid, liquid having no chemical reactivity with and insoluble in carbon dioxide can be used. A configuration of the liquid circuit 14 will be described later more in detail.

The controller 15 is composed of a well-known microcomputer including a CPU (Central Processing Unit), a ROM (Read Only Memory), and a RAM (Random Access Memory) or the like. The controller 15 is also composed of peripheral circuits connected to these devices, respectively. The controller 15 controls various control targets to operate by performing various computing and processing based on control program stored in the ROM. Hence, the controller 15 corresponds to one example of a controller in the present disclosure.

Various control targets, such as the compressor 11, the carbon dioxide recovery apparatus 10, the flow channel switching valve 12, component devices of the liquid circuit 14 (e.g., a liquid supply pump 143 and a liquid discharge pump 145 described later in detail) are connected to an output side of the controller 15.

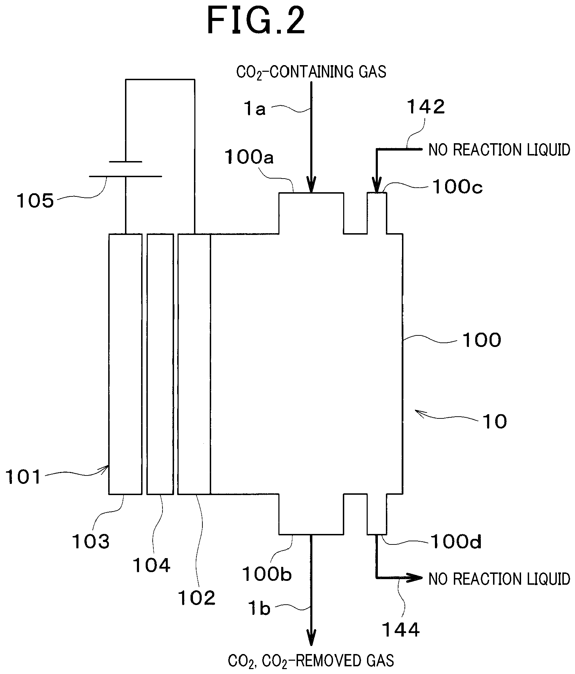

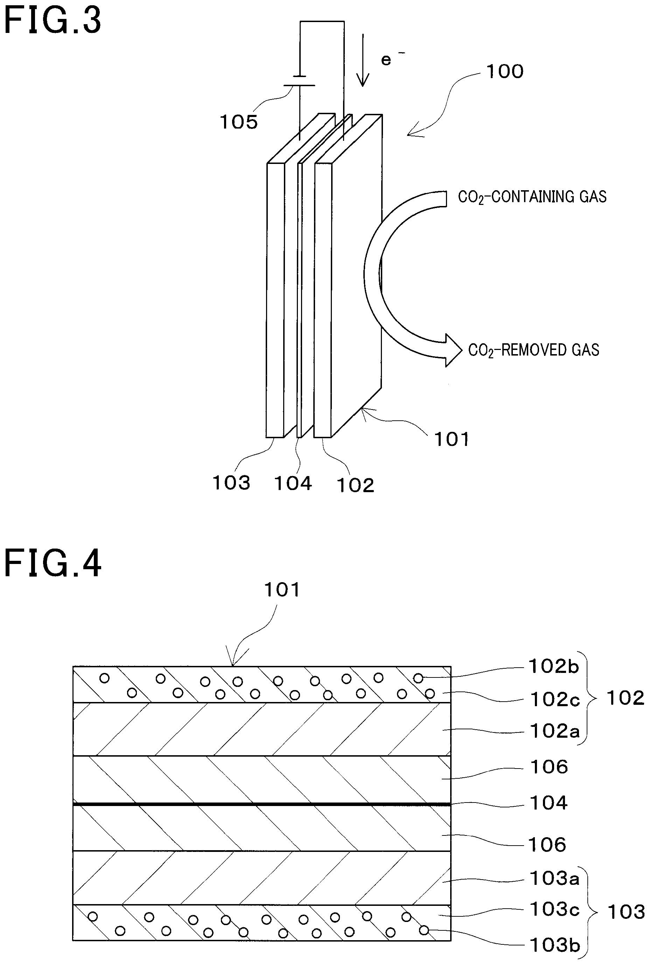

Next, the carbon dioxide recovery apparatus 10 will be described more in detail with reference to FIGS. 2 and 3. As shown in FIG. 2, the carbon dioxide recovery apparatus 10 includes an adsorber 100 and an electrochemical cell 101. The adsorber 100 is a container that accommodates the electrochemical cell 101. A carbon dioxide-containing gas and a circulation liquid are introduced into the adsorber 100.

Further, the adsorber 100 includes a gas flow inlet 100a, a gas flow outlet 100b, and a liquid flow inlet 100c. The adsorber 100 also includes a liquid flow outlet 100d. The gas flow inlet 100a allows a gas containing carbon dioxide to flow into the adsorber 100. The gas flow outlet 100b drains off a carbon dioxide-removed gas and carbon dioxide from the adsorber 100. The liquid flow inlet 100c allows the circulation liquid to enter the adsorber 100. The liquid flow outlet 100d drains off the circulation liquid from the adsorber 100.

A gas supply channel 1a is connected to the gas flow inlet 100a. The gas supply channel 1a connects a discharge outlet of the compressor 11 and the gas flow inlet 100a with each other to supply a carbon dioxide-containing gas discharged from the compressor 11 to the adsorber 100.

A gas discharge channel 1b is connected to the gas flow outlet 100b. The gas discharge channel 1b connects the gas flow outlet 100b and an inlet of the flow channel switching valve 12 with each other to guide a carbon dioxide-removed gas and carbon dioxide discharged from the adsorber 100 to an inlet of the flow channel switching valve 12.

The electrochemical cell 101 is now described more in detail with reference to FIG. 3. As shown in FIG. 3, the electrochemical cell 101 includes a working electrode 102, a counter electrode 103, and an insulating layer 104. For example, the working electrode 102, the counter electrode 103, and the insulating layer 104 can be planar as shown. Although the working electrode 102, the counter electrode 103, and the insulating layer 104 are illustrated at intervals for convenience of explanation, these components contact each other in practice.

Further, the carbon dioxide recovery apparatus 10 adsorbs and desorbs carbon dioxide based on (or by causing) an electrochemical reaction, thereby separating and recovering the carbon dioxide from the carbon dioxide-containing gas. The carbon dioxide recovery apparatus 10 includes a power supply 105 acting as a voltage applicator that applies a given voltage between the working electrode 102 and the counter electrode 103. A potential difference between the working electrode 102 and the counter electrode 103 can be changed. The working electrode 102 acts as a negative electrode. The counter electrode 103 acts as a positive electrode.

Hence, in the electrochemical cell 101, electrons are supplied from the counter electrode 103 to the working electrode 102 when the voltage is applied therebetween. Then, the working electrode 102, i.e., the below described carbon dioxide adsorbent 102b combines with carbon dioxide as the electrons are supplied thereto.

The electrochemical cell 101 can operate by switching a mode between the carbon dioxide adsorption mode in which the working electrode 102 adsorbs carbon dioxide and a carbon dioxide recovery mode in which carbon dioxide is recovered (i.e., collected) from the working electrode 102. The mode can be switched by changing the potential difference between the working electrode 102 and the counter electrode 103. The carbon dioxide adsorption mode is a charging mode in which the electrochemical cell 101 electrically charges (i.e., obtains charge). By contrast, the carbon dioxide recovery mode is a discharge mode in which the electrochemical cell 101 electrically discharges (i.e., loses charges).

In the carbon dioxide adsorption mode, a first voltage V1 is applied between the working electrode 102 and the counter electrode 103, so that electrons are supplied from the counter electrode 103 to the working electrode 102. When the first voltage V1 is applied, a potential of the working electrode 102 is less than a potential of the counter electrode. The first voltage V1 can be within a range of from about 0.5V to about 2.0V, for example.

By contrast, in the carbon dioxide recovery mode, a second voltage V2 lower than the 1^{st} voltage is applied between the working electrode 102 and the counter electrode 103, so that electrons are supplied from the working electrode 102 to the counter electrode 103. Here, it is only necessary that the second voltage V2 is lower than the first voltage V1. That is, any magnitude relation is possible between a potential of the working electrode and that of the counter electrode. Specifically, in the carbon dioxide recovery mode, any one of the below described magnitude relations can be used.
Potential of working electrode < Potential of counter electrode,
Potential of working electrode = Potential of counter electrode,
Potential of working electrode > Potential of counter electrode.

Further, as shown in FIG. 4. the working electrode 102 includes a working electrode substrate 102a and the carbon dioxide adsorbent 102b. The working electrode substrate 102a is porous as shown. In FIG. 4. the carbon dioxide adsorbent 102b is illustrated outside of the working electrode substrate 102a for the purpose of convenience. That is, the carbon dioxide adsorbent 102b is accommodated in the porous working electrode substrate 102a. Hence, the working electrode substrate 102a corresponds to one example of an electrode substrate in the present disclosure.

The working electrode substrate 102a is made of porous conductive material that allows carbon dioxide to pass it through. As the working electrode substrate 102a, a carbonaceous material or a metallic material and the like can be used. As the carbonaceous material constituting the working electrode substrate 102a, carbon paper, carbon cloth, and a nonwoven carbon mat can be used. Also used as the carbonaceous material is porous gas diffusion layer (GDL) or the like. As the metal material constituting the working electrode substrate 102a, a mesh like structure made of metal (e.g., Al, Ni) can be used, for example.

The carbon dioxide adsorbent 102b has redox activity and is an electrochemically active species capable of causing a reversible redox reaction. Specifically, the carbon dioxide adsorbent 102b can combine with and adsorb carbon dioxide in a reduced state. Also, the carbon dioxide adsorbent 102b can discharge carbon dioxide in an oxidized state.

The carbon dioxide adsorbent 102b also has a functional group that combines with carbon dioxide. The functional group that combines with carbon dioxide gives and receives (i.e., delivers and accepts) electrons, thereby becoming a carbon dioxide adsorption site. As the functional group that combines with the carbon dioxide, a functional group containing an element (e.g., F, O, N, Cl, S) having high electronegativity is exemplified. Hence, a ketone group (C = O) can be used, for example.

Further, in this embodiment, the carbon dioxide adsorbent 102b has no affinity for the circulation liquid. Hence, the carbon dioxide adsorbent 102b contains an amine-based compound.

Further, a working electrode binder 102c is disposed between the working electrode substrate 102a and the carbon dioxide adsorbent 102b. Since it is adhesive, the working electrode binder 102c holds the carbon dioxide absorbent 102b on the working electrode substrate 102a.

The working electrode binder 102c is made of conductive material. Hence, electrons can travel between the working electrode substrate 102a and the carbon dioxide adsorbent 102b.

Further, the carbon dioxide adsorbent 102b is held in the working electrode binder 102c. That is, the carbon dioxide adsorbent 102b is covered with the working electrode binder 102c. Accordingly, the working electrode binder 102c corresponds to one example of a coating material in the present disclosure. Hence, the carbon dioxide adsorbent 102b can be firmly held by the working electrode binder 102c.

Further, the working electrode binder 102c may have carbon dioxide permeability that allows carbon dioxide to permeate the working electrode binder 102c. Furthermore, the working electrode binder 102c may have a carbon dioxide selective permeability that selectively allows carbon dioxide to permeate the working electrode binder 102c among multiple gases contained in the carbon dioxide-containing gas. In addition, the working electrode binder 102c also has no affinity for the circulation liquid.

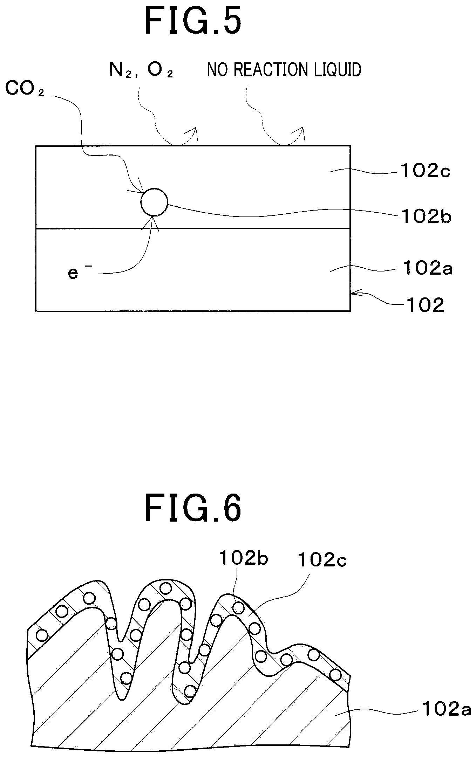

Hence, as shown in FIG. 5, the carbon dioxide contained in the carbon dioxide-containing gas permeates the working electrode binder 102c and can reach the carbon dioxide adsorbent 102b included in the working electrode binder 102c. By contrast, gases (e.g., nitrogen, oxygen) contained in the carbon dioxide-containing gas other than the carbon dioxide cannot permeate the working electrode binder 102c having carbon dioxide selective permeability. Further, the circulation liquid also does not penetrate the working electrode binder 102c having no affinity for the circulation liquid.

Further, as the working electrode binder 102c, non-fluid material having no fluidity can be used. As the non-fluid material, a gel-like substance or a solid substance can be exemplified. As the gel-like material, an ionic liquid gel may be used, for example. As the solid material, a solid electrolyte or a conductive resin or the like can be used.

When the solid electrolyte is used as the working electrode binder 102c, it is desirable to use an ionomer composed of a polymer electrolyte or the like, because it increases a contact area of the working electrode binder 102c contacting the carbon dioxide adsorbent 102b. Further, when the conductive resin is used as the working electrode binder 102c, an epoxy resin containing Ag or the like as a conductive filler or a fluororesin, such as polytetrafluoroethylene (PTFE), polyvinylidene fluoride (PVDF), etc., and the like can be used.

Further, raw material of the working electrode binder 102c can be a liquid substance having a given degree of fluidity. In such a situation, it is desirable that the carbon dioxide adsorbent 102b is dispersed in and mixed with the raw material of the working electrode binder 102c, and attaching the mixture to the working electrode substrate 102a by either impregnation or coating. Subsequently, the raw material of the working electrode binder 102c is caused to gel or solidify under given conditions. Such given conditions may be given pressures, given temperatures, and given periods or the like that cause the raw material of the working electrode binder 102c to gel or solidify.

As shown in FIG. 6, the working electrode binder 102c enters holes or gaps between irregularities formed on the working electrode substrate 102a, and is fixed therein. Hence, due to an anchoring effect caused in this way, the working electrode binder 102c can mechanically bond firmly to the working electrode substrate 102a.

In this embodiment, ionic liquid gel prepared by causing ionic liquid to gel is used as the working electrode binder 102c. The ionic liquid gel has a gel-like structure in which ionic liquid is retained in a polymer mesh structure.

A well-known structure (e.g., structure disclosed in Japanese Patent Application Laid Open No. 2015-25056) may be appropriately used as the ionic liquid gel. Specifically, in such a structure, the ionic liquid is held in a three-dimensional mesh structure composed of two different polymer chains. The three-dimensional mesh structure includes a first mesh structure formed by condensation polymerization and a second mesh structure formed by radical polymerization.

Here, tetra ethoxy-orthosilicate (TEOS) can be used as monomer causing the condensation polymerization. The TEOS also acts as a crosslinking agent causing the condensation polymerization.

Further, as a monomer causing the radical polymerization, N, N-dimethylacrylamide (DMAAm) can be used. Also, N, N'-Methylenebis acrylamide (MBAA) can be used in the radical polymerization as a crosslinking agent. As an initiator for initiating the radical polymerization, 2,2'-azobis (isobutyronitrile) (AIBN) can be used.

Hence, the ionic liquid constituting the ionic liquid gel functions as a solvent for monomers respectively constituting first and second mesh structures. Hence, after the first and second mesh structures are formed, the first mesh structure and the second mesh structure intertwine with each other, and the ionic liquid is contained in these mesh structures.

Here, as the ionic liquid constituting the ionic liquid gel, 1-ethyl-3-methylimidazouriumubis (trifluoromethanesulfonic) imide ([EMIM][Tf₂N]), 1-butyl-3-methylimidazoliumbis (trifluoromethanesulfonic) imide ([BMIM][Tf₂N]), and 1-butyl-3-methylimidazolium tetrafluoroborate ([BMIM][BF₄]) or the like can be used.

Further, as illustrated in FIG. 4. the counter electrode 103 has a similar configuration as the working electrode 102, and includes a counter electrode substrate 103a, an electrochemically active auxiliary material 103b, and a counter electrode binder 103c.

The counter electrode substrate 103a is conductive and may be made of the same as the working electrode substrate 102a or different material from that of the working electrode substrate 102a. The counter electrode binder 103c may be made of conductive material and only needs to be able to cause the counter electrode substrate 103a to hold the electrochemically active auxiliary material 103b. The counter electrode binder 103c may be made of the same material as the working electrode binder 102c or different material from that of the working electrode binder 102c.

The electrochemically active auxiliary material 103b is an electrochemically active auxiliary species with a redox state opposite to that of the carbon dioxide adsorbent 102b, and sends and receives electrons to and from the carbon dioxide adsorbent 102b. For example, as the electrochemically active auxiliary material 103b, a metal complex that changes a valence of metal ion thereof to donate and accept electrons can be used. As such a metal complex, cyclopentadienyl metal complex, such as ferrocene, nickelocene, cobaltocene, etc., or porphyrin metal complex and the like can be exemplified.

Further, as illustrated in FIG. 4, an insulating layer 104 is disposed between the working electrode 102 and the counter electrode 103 to separate the working electrode 102 and the counter electrode 103 from each other. The insulating layer 104 prevents physical contact between the working electrode 102 and the counter electrode 103, thereby suppressing an electrical short circuit.

As the insulating layer 104, either the below described separator or a gas layer such as air, etc., can be used. In this embodiment, a porous separator is used as the insulating layer 104. The separator may be a cellulose film or made of polymer. Otherwise, the separator may be made of composite material composed of polymer and ceramic or the like.

Further, as shown in FIG. 4, an ionic conductive member 106 is provided between the working electrode 102 and the counter electrode 103. Specifically, the ionic conductive member 106 is provided between the working electrode substrate 102a and the counter electrode substrate 103a via the insulating layer 104.

The ionic conductive member 106 is in contact with the carbon dioxide adsorbent 102b in the working electrode substrate 102a. The ionic conductive member 106 has ionic conductivity and promotes electrical conduction of electrons to the carbon dioxide absorbent 102b. Here, ions contained in the ionic conductive member 106 do not directly react with a functional group included in the carbon dioxide adsorbent 102b to combine with carbon dioxide.

The ionic conductive member 106 may be made of non-fluid material not having fluidity. As the non-fluid material, a gel-like substance, such as an ionic liquid gel, etc., or a solid substance, such as a solid electrolyte, etc., can be exemplified (i.e., used). Here, the ionic conductive member 106 may be made of the same material as the working electrode binder 102c. Otherwise, the ionic conductive member 106 may be made of different material from that of the working electrode binder 102c.

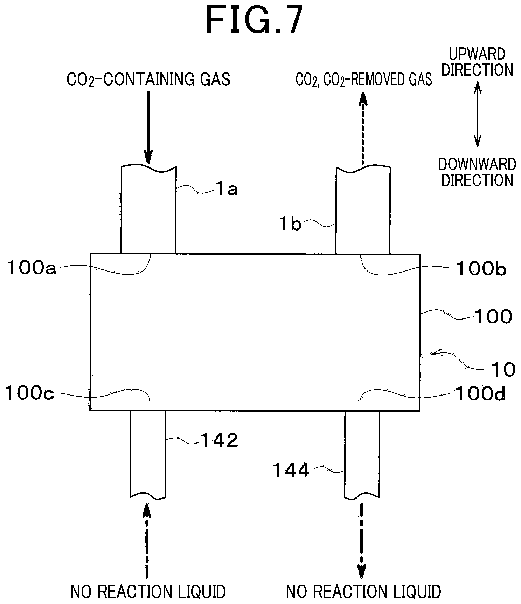

Next, the liquid circuit 14 will be described more in detail with reference to FIGS. 1 and 7. As shown in FIG. 1, the liquid circuit 14 is composed of a liquid tank 141, a liquid supply channel 142, and a liquid supply pump 143. The liquid circuit 14 is also composed of a liquid discharge channel 144 and a liquid discharge pump 145.

The liquid tank 141 stores circulation liquid therein. The liquid supply channel 142 connects to an outlet of the liquid tank 141 and a liquid flow inlet 100c of the adsorber 100 to supply the circulation liquid from the liquid tank 141 to the adsorber 100.

The liquid supply pump 143 is disposed in the liquid supply channel 142 and pressure feeds the circulation liquid from the liquid tank 141 to the adsorber 100. A rotation speed (i.e., pressure feeding ability) of the liquid supply pump 143 is controlled by a control voltage output from the controller 15.

The liquid discharge channel 144 connects a liquid flow outlet 100d of the adsorber 100 with an inlet of the liquid tank 141 to discharge the circulation liquid from the adsorber 100 to the liquid tank 141. That is, the liquid discharge channel 144 discharges the circulation liquid in the adsorber 100 to an outside of the adsorber 100.

The liquid discharge pump 145 is disposed in the liquid discharge channel 144 and pressure feeds the circulation liquid to the liquid tank 141 from the adsorber 100. A rotation speed (i.e., pressure feeding ability) of the liquid discharge pump 145 is controlled by a control voltage output from the controller 15.

As shown in FIG. 7, the liquid supply channel 142 and the liquid discharge channel 144 are connected to a lower side of the adsorber 100 in a vertical direction. Specifically, in this embodiment, each of the liquid supply channel 142 and the liquid discharge channel 144 is connected to a lower surface (i.e., bottom surface) of the adsorber 100.

By contrast, the gas supply channel 1a and the gas discharge channel 1b are connected to an upper side of the adsorber 100 in the vertical direction. Specifically, in this embodiment, each of the gas supply channel 1a and the gas discharge channel 1b is connected to an upper surface of the adsorber 100.

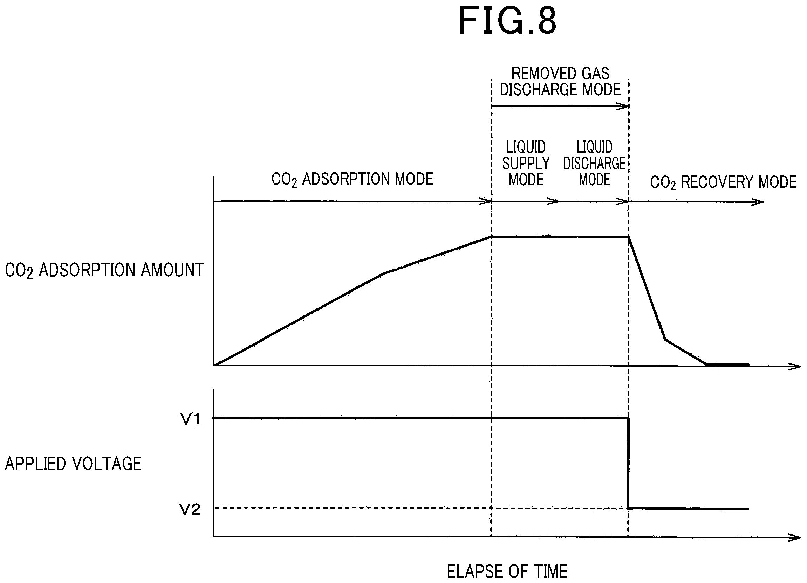

Next, operation of the carbon dioxide recovery system 1 of this embodiment will be described in detail with reference to FIGS. 8 to 10. As shown in FIG. 8, the carbon dioxide recovery system 1 is enabled to operate in a carbon dioxide adsorption mode, a removed gas discharge mode, and a carbon dioxide recovery mode. The carbon dioxide recovery system 1 repeatedly operates in the carbon dioxide adsorption mode, the removed gas discharge mode, and the carbon dioxide recovery mode in this order by switching an operation mode. Such operation of the carbon dioxide recovery system 1 is controlled by the controller 15.

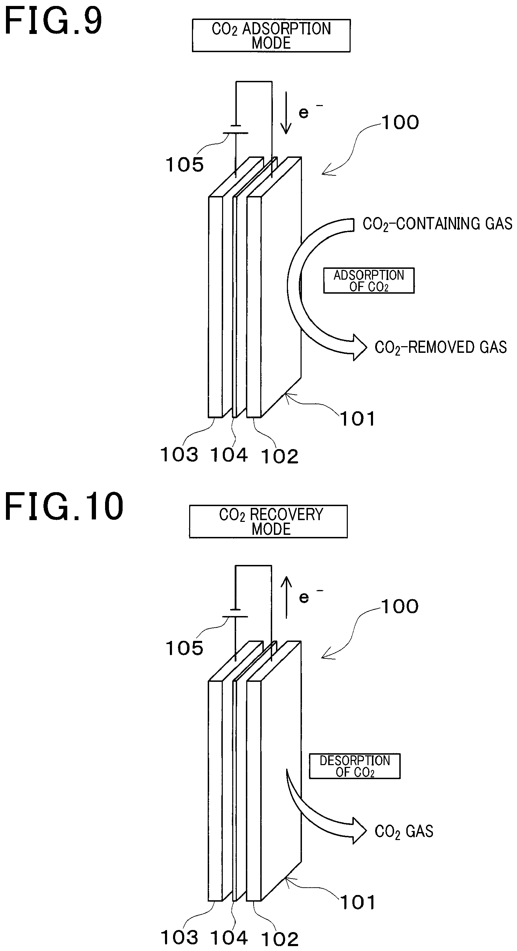

First, the carbon dioxide adsorption mode will be described with reference to FIG. 9. As shown in FIG. 9, in the carbon dioxide adsorption device, the compressor 11 is activated to supply a carbon dioxide-containing gas to the adsorber 100. In the carbon dioxide adsorption mode, a first voltage V1 is applied between the working electrode 102 and the counter electrode 103. With this, electron supply by the electrochemically active auxiliary material 103b of the counter electrode 103 and electron uptake by the carbon dioxide adsorbent 102b of the working electrode 102 can be simultaneously achieved.

Specifically, the electrochemically active auxiliary material 103b of the counter electrode 103 loses electrons and becomes oxidized. These electrons are supplied to the working electrode 102 from the counter electrode 103. The carbon dioxide adsorbent 102b of the working electrode 102 then receives the electrons and becomes reduced (i.e., enters a reduced state).

The carbon dioxide adsorbent 102b reduced in this way then increases a binding force for adsorbing carbon dioxide, and combines with and adsorbs carbon dioxide contained in the carbon dioxide-containing gas. With this, the carbon dioxide recovery apparatus 10 can recover the carbon dioxide from the carbon dioxide-containing gas.

Next, the removed gas discharge mode will be described in detail with reference to FIG. 8. As shown in FIG. 8, the removed gas discharge mode includes a liquid supply mode and a liquid discharge mode. The carbon dioxide recovery system 1 executes the liquid discharge mode after performing and completing the liquid supply mode.

In the removed gas discharge mode (i.e., both the liquid supply mode and the liquid discharge mode), the first voltage V1 is continuously applied between the working electrode 102 and the counter electrode 103. However, in the removed gas discharge mode, the compressor 11 stops working so that the carbon dioxide-containing gas is not supplied to the adsorber 100.

Further, in the liquid supply mode, the liquid supply pump 143 is activated to supply the circulation liquid from the liquid tank 141 to the adsorber 100. At this moment, the carbon dioxide remains adsorbed by the carbon dioxide adsorbent 102b in the adsorber 100, and is not dissolved in the circulation liquid and does not chemically react with the circulation liquid.

Further, in the liquid discharge mode, the liquid supply pump 143 stops working so that the circulation liquid is not supplied to the adsorber 100. Besides, in the liquid discharge mode, the liquid discharge pump 145 is activated to discharge the cyclic liquid from the adsorber 100 to the liquid tank 141. At this moment, due to a flow of the circulation liquid discharged from the adsorber 100, a carbon dioxide-removed gas excluding the carbon dioxide is discharged from the adsorber 100 to the gas discharge channel 1b. Then, since the flow channel switching valve 12 has switched a channel of the gas discharge channel 1b to a channel directed to the atmosphere in the liquid discharge mode, the carbon dioxide-removed gas emitted from the adsorber 100 is discharged into the atmosphere.

Next, the carbon dioxide recovery mode will be described in detail with reference to FIG. 10. As shown in FIG. 10, in the carbon dioxide recovery mode, the liquid discharge pump 145 stops working so that the circulation liquid is not discharged from the adsorber 100. Then, a second voltage V2 is applied in the carbon dioxide recovery mode between the working electrode 102 and the counter electrode 103. With this, electron supply by the carbon dioxide adsorbent 102b of the working electrode 102 and electron uptake by the electrochemically active auxiliary material 103b of the counter electrode 103 can be simultaneously achieved.

Hence, the carbon dioxide adsorbent 102b of the working electrode 102 supplies electrons and becomes oxidized (i.e., enters an oxidized state). Accordingly, the carbon dioxide adsorbent 102b reduces a binding force for adsorbing carbon dioxide and desorbs the carbon dioxide. By contrast, the electrochemically active auxiliary material 103b of the counter electrode 103 receives the electrons and enters a reduced state.

Subsequently, the carbon dioxide desorbed from the carbon dioxide adsorbent 102b is discharged from the adsorber 100. Since the flow channel switching valve 12 has switched a channel of the gas discharge channel 1b to a channel directed to the carbon dioxide utilization apparatus 13, the carbon dioxide discharged from the adsorber 100 is supplied to the carbon dioxide utilization apparatus 13.

Hence, in this embodiment, the liquid supply channel 142 and the liquid supply pump 143 collectively correspond to one example of a liquid supply section that supplies circulation liquid to the adsorber 100. Further, the gas discharge channel 1b, the liquid discharge channel 144, and the liquid discharge pump 145 collectively correspond to one example of a discharge section that discharges circulation liquid supplied from the liquid supply section and a carbon dioxide-removed gas from the adsorber 100.

As described heretofore, the carbon dioxide recovery system 1 of this embodiment includes the liquid supply channel 142 acting as the liquid supply section, the liquid supply pump 143, and the gas discharge channel 1b acting as the discharge section. The carbon dioxide recovery system 1 also includes the liquid discharge channel 144 and the liquid discharge pump 145. Then, the carbon dioxide recovery system 1 is configured to supply the circulation liquid to the adsorber 100 with the given voltage being applied between the working electrode 102 and the counter electrode 103. The carbon dioxide recovery system 1 is also configured subsequently to perform a removed gas discharge mode in which circulation liquid and a carbon dioxide-removed gas are discharged from the adsorber 100.

With this, the carbon dioxide-removed gas can be discharged from the adsorber 100 together with the circulation liquid. As a result, since a degree of purity of the carbon dioxide in the adsorber 100 can be increased, a degree of purity of carbon dioxide as recovered can be accordingly enhanced.

According to this embodiment, the carbon dioxide adsorbent 102b of the working electrode 102 in the electrochemical cell 101 is covered with the working electrode binder 102c. As a result, it becomes difficult for the carbon dioxide adsorbent 102b to peel off from the working electrode substrate 102a, and an adsorption amount of carbon dioxide in the electrochemical cell 101 can be suppressed or inhibited from decreasing over time.

Further, the working electrode binder 102c of this embodiment has no affinity for the circulation liquid. As a result, the working electrode binder 102c can be suppressed or inhibited from reaching the circulation liquid even in the presence of the circulation liquid. Owing to this, it is possible to suppress preferential reaction of the circulation liquid with the carbon dioxide adsorbent 102b, and accordingly an adsorption amount of carbon dioxide adsorbed by the carbon dioxide adsorbent 102b can be increased.

Further, according to this embodiment, the working electrode binder 102c has carbon dioxide permeability. As a result, carbon dioxide can penetrate the working electrode binder 102c and reach the carbon dioxide adsorbent 102b. As a result, even when the carbon dioxide adsorbent 102b is covered with the working electrode binder 102c, the carbon dioxide can be recovered (i.e., collected) by the carbon dioxide adsorbent 102b.

Further, according to this embodiment, the working electrode binder 102c is composed of an ionic liquid gel. As a result, it is possible to easily give the working electrode binder 102c both no affinity for the circulation liquid and carbon dioxide permeability. In addition, it is also possible to give the working electrode binder 102c a nonvolatility at ordinary temperature and normal pressure.

Further, the carbon dioxide adsorbent 102b of this embodiment has no affinity for the circulation liquid. As a result, it is possible to suppress or inhibit preferential reaction of the circulation liquid with the carbon dioxide adsorbent 102b, thereby enabling an increase in adsorption amount of carbon dioxide adsorbed by the carbon dioxide adsorbent 102b.

Further, in the carbon dioxide recovery system 1 of this embodiment, the liquid supply channel 142 and the liquid discharge flow channel 144 are connected to a bottom of the adsorber 100 in the vertical direction. By contrast, the gas discharge channel 1b is connected to the upper side of the adsorber 100 in the vertical direction. With this, since these liquid and gas easily undergo phase separation in the adsorber 100, the carbon dioxide-removed gas can be easily discharged from the adsorber 100.

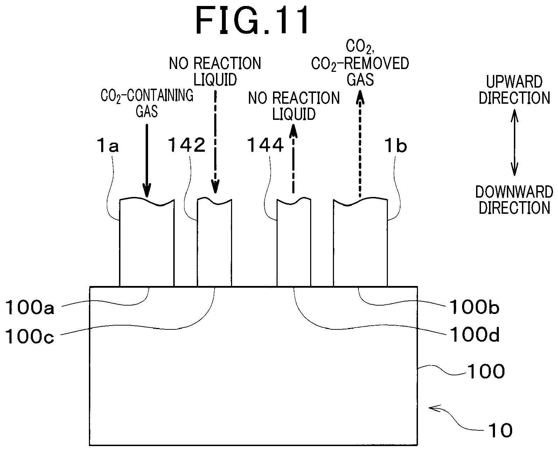

Next, a second embodiment of the present disclosure will be described with reference to FIG. 11. In the second embodiment, each of the liquid supply channel 142 and the liquid discharge channel 144 is connected to the adsorber 100 at different connection positions thereof from connection positions of the first embodiment.

Specifically, as shown in FIG. 11, in a carbon dioxide recovery system 1 of this embodiment, each of the liquid supply channel 142 and the liquid discharge channel 144 is connected to an upper side of the adsorber 100 in a vertical direction. More specifically, each of the liquid supply channel 142 and the liquid discharge channel 144 is connected to an upper surface of the adsorber 100.

Hence, as described heretofore, in the carbon dioxide recovery system 1 of the second embodiment, the liquid supply channel 142, the liquid discharge channel 144, and the gas discharge channel 1b are connected to the upper side of the adsorber 100. As a result, it is possible to easily supply the circulation liquid to the adsorber 100 and to discharge the carbon dioxide-removed gas from the adsorber 100.

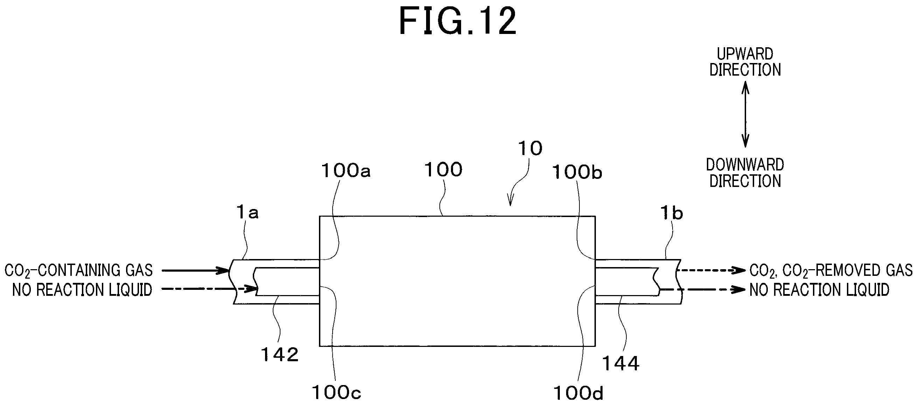

Next, a third embodiment of the present disclosure will be described with reference to FIG. 12. As shown, in the third embodiment, each of the gas supply channel 1a, the gas discharge channel 1b, and the liquid supply channel 142 is connected to the adsorber 100 at connection positions thereof different from connection positions of the first embodiment. The liquid discharge channel 144 is also connected to the adsorber 100 at a connection position thereof different from a connection position of the first embodiment.

As shown in FIG. 12, in the carbon dioxide recovery system 1 of the third embodiment, the gas supply channel 1a, the gas discharge channel 1b, and the liquid supply channel 142 are connected to a vertical center of the adsorber 100 defined in a vertical direction. The liquid discharge channel 144 is also connected to the vertical center of the adsorber 100.

Further, in the third embodiment, the adsorber 100 is horizontally elongated. That is, a longitudinal side of the adsorber 100 is parallel to a horizontal direction. Then, the gas supply channel 1a and the liquid supply channel 142 are connected to one end of the adsorber 100 in the longitudinal direction. The gas discharge channel 1b and the liquid discharge channel 144 are connected to the other end of the adsorber 100 in the longitudinal direction.

Hence, as described heretofore, according to the carbon dioxide recovery system 1 of this embodiment, each of the gas supply channel 1a, the gas discharge channel 1b, and the liquid supply channel 142 is connected to the vertical center of the adsorber 100. The liquid discharge channel 144 is also connected to the vertical center of the adsorber 100. With this, the carbon dioxide recovery system 1 can efficiently become downsized.

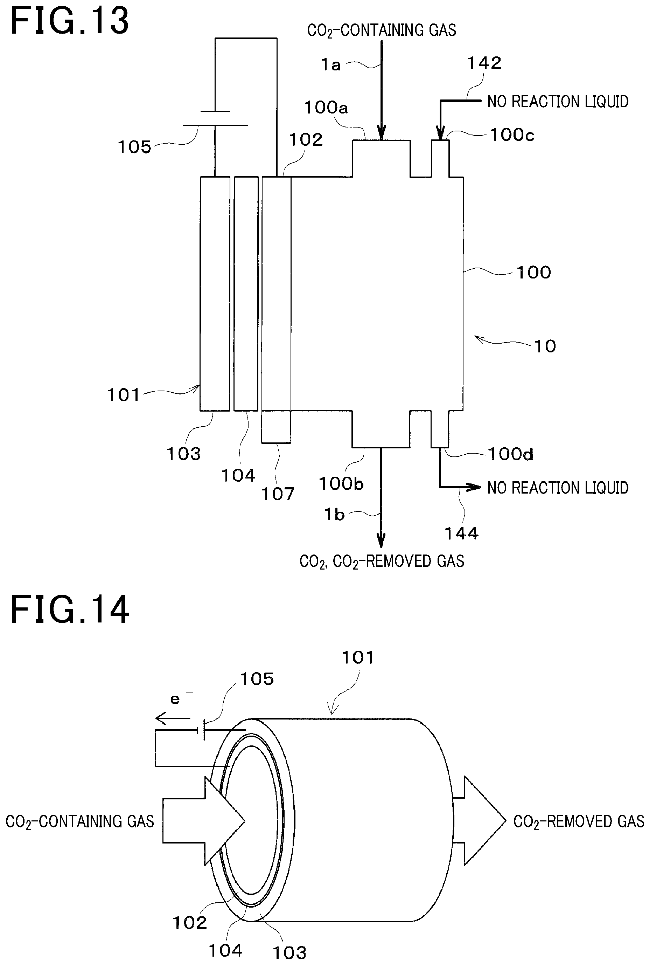

Next, a fourth embodiment of the present disclosure will be described with reference to FIG. 13. The fourth embodiment modifies the carbon dioxide recovery apparatus 10 of the first embodiment as to a configuration.

That is, as shown in FIG. 13, in the carbon dioxide recovery system 1 of the fourth embodiment, the carbon dioxide recovery apparatus 10 includes a temperature controller 107. The temperature controller 107 increases temperature of the working electrode binder 102c acting as coating material when carbon dioxide is adsorbed by the carbon dioxide adsorbent 102b. The temperature controller 107 also decreases temperature of the working electrode binder 102c when carbon dioxide is desorbed from the carbon dioxide adsorbent 102b. The temperature controller 107 is operated by a control voltage output from the controller 15.

Here, in the fourth embodiment, an ionic liquid gel prepared by causing ionic liquid to gel is used as the working electrode binder 102c. The ionic liquid has a property of increasing solubility of carbon dioxide therein at high temperature and decreasing the solubility thereof at low temperature.

Hence, according to the carbon dioxide recovery system 1 of the fourth embodiment, temperature of the working electrode binder 102c is increased by the temperature controller 107 when carbon dioxide is adsorbed, so that the carbon dioxide can easily dissolve into the working electrode binder 102c. As a result, the carbon dioxide can effectively be adsorbed by the carbon dioxide adsorbent 102b.

Further, when carbon dioxide is desorbed, temperature of the working electrode binder 102c is decreased by the temperature controller 107, so that the carbon dioxide does not easily dissolve in the working electrode binder 102c. Hence, this can promote desorption of the carbon dioxide from the carbon dioxide adsorbent 102b.

The present disclosure is not limited to the above-described embodiments, and various modifications thereof can be possible within a range that does not deviate from a point of the present disclosure as described hereinbelow. Further, various devices employed in the above-described embodiments can be optionally combined as long as combination is possible in practice.

First, in the above-described embodiments, each of the working electrode 102, the counter electrode 103, and the insulating layer 104 of the electrochemical cell 101 is planar. However, as shown in FIG. 14. each of the working electrode 102, the counter electrode 103, and the insulating layer 104 can be cylindrical. In such a situation, the working electrode 102 can be placed innermost, the counter electrode 103 is placed outermost, and the insulating layer 104 is disposed between the working electrode 102 and the counter electrode 103. As a result, a space formed inside of the working electrode 102 can constitute a gas flow channel through which the carbon dioxide containing gas passes.

Secondly, in the above-described embodiments, the ionic liquid gel prepared by causing an ionic liquid to gel is used as the working electrode binder 102c. However, the working electrode binder 102c is not limited to the ionic liquid gel. For example, an ionic liquid may be used as the working electrode binder 102c.

Thirdly, in the above-described embodiments, the liquid having no chemical reactivity with and insolubility in carbon dioxide is used as the circulation liquid. However, the circulation liquid may not necessarily have the no chemical reactivity with and insolubility in the carbon dioxide.

That is, water can be used as the circulation liquid, for example. In such a situation, each of the carbon dioxide adsorbent 102b and the working electrode binder 102c can have hydrophobicity.

A carbon recovery system and method improve purity of carbon dioxide when it is recovered and include an electrochemical cell (101) including a working electrode (102) and a counter electrode (103). When a given voltage is applied between the working electrode and the counter electrode, electrons are supplied from the counter electrode to the working electrode. The working electrode then combines with carbon dioxide upon receiving the electrons supplied thereto. An adsorber (100) accommodates the electrochemical cell and introduces a carbon dioxide-containing gas to itself. A liquid supply section (142, 143) supplies liquid to the adsorber with a given voltage being applied between the working electrode and the counter electrode. A discharge section (1b, 144, 145) discharges the liquid supplied from the liquid supply section and carbon dioxide-removed gases from the adsorber with the given voltage being applied between the working electrodes and the counter electrode.

## Claims

1. A carbon dioxide recovery apparatus (10) that separates carbon dioxide from a carbon dioxide-containing gas containing carbon dioxide by causing an electrochemical reaction, the carbon dioxide recovery apparatus comprising:
a working electrode (102);
a counter electrode (103); and
a voltage applicator (105) to apply a voltage between the working electrode and the counter electrode, the counter electrode supplying electrons to the working electrode 102 when the voltage is applied by the power supply,
wherein the working electrode includes:
an electrochemical cell (101) to adsorb carbon dioxide upon receiving the electrons from the counter electrode;
an adsorber (100) accommodating the electrochemical cell to receive the carbon dioxide-containing gas;
a liquid supply section (142, 143) to supply liquid to the adsorber while the voltage is applied between the working electrode and the counter electrode; and
a discharge section (1b, 144, 145) to discharge the liquid supplied from the liquid supply section and carbon dioxide-removed gas obtained by separating carbon dioxide from the carbon dioxide-containing gas, from the adsorber while the voltage is applied between the working electrode and the counter electrode.

2. The carbon dioxide recovery apparatus as claimed in Claim 1, wherein the liquid has no chemical reactivity with and is insoluble in the carbon dioxide.

3. The carbon dioxide recovery apparatus as claimed in one of Claims 1 and 2, further comprising a controller (15) to control operation of the voltage applicator, the liquid supply section, and the discharge section,
wherein the controller controls the discharge section to discharge the liquid and the carbon dioxide-removed gas from the adsorber after the liquid supply section has supplied the liquid to the adsorber while controlling the voltage applicator to apply the voltage between the working electrode and the counter electrode.

4. The carbon dioxide recovery apparatus as claimed in one of Claims 1 to 3, wherein the working electrode includes an electrode substrate (102a) and a carbon dioxide adsorbent (102b),
wherein the carbon dioxide adsorbent adsorbs the carbon dioxide due to the electrons supplied from the counter electrode to the working electrode when the voltage is applied between the working electrode and the counter electrode.

5. The carbon dioxide recovery apparatus as claimed in Claim 4, wherein the carbon dioxide adsorbent is covered with a coating material (102c).

6. The carbon dioxide recovery apparatus as claimed in Claim 5, wherein the coating material does not have affinity for the liquid.

7. The carbon dioxide recovery apparatus as claimed in Claim 6, wherein the coating material has hydrophobicity.

8. The carbon dioxide recovery apparatus as claimed in one of Claims 5 to 7, wherein the coating material has carbon dioxide permeability that allows carbon dioxide to permeate.

9. The carbon dioxide recovery apparatus as claimed in one of Claims 5 to 8, wherein the coating material is an ionic liquid gel prepared by causing ionic liquid to gel.

10. The carbon dioxide recovery apparatus as claimed in Claim 9, further comprising a temperature controller (107) to increase temperature of the coating material when the carbon dioxide is adsorbed by the carbon dioxide adsorbent and to lower temperature of the coating material when the carbon dioxide is desorbed from the carbon dioxide adsorbent.

11. The carbon dioxide recovery apparatus as claimed in one of Claims 4 to 10, wherein the carbon dioxide adsorbent does not have affinity for the liquid.

12. The carbon dioxide recovery apparatus as claimed in Claim 11, wherein the carbon dioxide adsorbent has hydrophobicity.

13. The carbon dioxide recovery apparatus as claimed in one of Claims 11 and 12, wherein the carbon dioxide adsorbent includes an amine-based compound.

14. The carbon dioxide recovery apparatus as claimed in one of Claims 1 to 13, wherein the liquid supply section includes a liquid supply channel (142) connected to a lower side of the adsorber to supply the liquid to the adsorber,
wherein the discharge section includes:
a gas discharge channel (1b) connected to an upper side of the adsorber to externally discharge the carbon dioxide-removed gas from the adsorber; and
a liquid discharge channel (144) connected to the lower side of the adsorber to externally discharge the liquid from the adsorber.

15. The carbon dioxide recovery apparatus as claimed in one of Claims 1 to 13, wherein the liquid supply section includes a liquid supply channel (142) connected to an upper side of the adsorber to supply the liquid to the adsorber,
wherein the discharge section includes:
a gas discharge channel (1b) connected to the upper side of the adsorber to externally discharge the carbon dioxide-removed gas from the adsorber, and
a liquid discharge channel (144) connected to the upper side of the adsorber to externally discharge the liquid from the adsorber.

16. The carbon dioxide recovery apparatus as claimed in Claim 1, wherein the liquid supply section includes a liquid supply channel (142) connected to a vertical center of the adsorber to supply the liquid to the adsorber,
wherein the discharge section includes:
a gas discharge channel (1b) connected to the vertical center of the adsorber to externally discharge the carbon dioxide-removed gas from the adsorber, and
a liquid discharge channel (144) connected to the vertical center of the adsorber to externally discharge the liquid from the adsorber.

17. A method of separating carbon dioxide from a carbon dioxide-containing gas containing carbon dioxide by causing an electrochemical reaction, the method comprising the steps of:
applying a voltage between a working electrode and a counter electrode;
supplying electrons from the counter electrode to the working electrode (102) based on the voltage applied therebetween;
receiving the carbon dioxide-containing gas at an adsorber (100) included in the working electrode accommodating an electrochemical cell;
adsorbing carbon dioxide included in the carbon dioxide-containing gas on the electrochemical cell upon receiving the electrons from the counter electrode (103);
supplying liquid from a liquid supply section to the adsorber while applying the voltage between the working electrode and the counter electrode; and
discharging the liquid supplied from the liquid supply section and carbon dioxide-removed gas obtained by separating carbon dioxide from the carbon dioxide-containing gas, from the adsorber while applying the voltage between the working electrode and the counter electrode.

18. A carbon dioxide recovery system comprising:
a CO₂-containing gas compressor (11) to pressure feed CO₂-containing gas downstream;
a liquid tank (141) to store liquid;
a liquid supply pump (143) to pump the liquid of the liquid tank downstream;
a liquid discharge pump (145) to discharge the liquid to the liquid tank;
a CO₂ utilization apparatus (13) to receive and utilize CO₂;
a flow channel switching valve (12) to switch between two channels to guide the CO₂ and the CO₂-removed gas to the CO₂ utilization apparatus and the atmosphere, respectively;
the carbon dioxide recovery apparatus (10) as claimed in Claim 1, the carbon dioxide recovery apparatus being located downstream of the liquid supply pump and the CO₂-containing gas compressor,
the carbon dioxide recovery apparatus being located upstream of the liquid discharge pump; and
a controller to control each of the CO₂-containing gas compressor, the liquid supply pump, the carbon dioxide recovery apparatus, the liquid discharge pump, and the flow channel switching valve to recover carbon dioxide to be used.
